# EUROPEAN PATENT APPLICATION

(11) **EP 4 304 292 A1**
(43) Date of publication of application: **10.01.2024**
(21) Application number: 22763647.9
(22) Date of filing: 07.03.2022
(51) Int. Cl.: H04W 76/28, H04W 76/18, H04W 76/11, H04W 76/14, H04L 1/18, H04W 4/40, H04W 80/02, H04W 92/18

(54) **METHOD AND DEVICE FOR CARRYING OUT SL DRX OPERATION WHEN SL RLF OCCURS IN NR V2X**

(30) Priority: 05.03.2021 KR 20210029447
(71) Applicant: LG Electronics Inc., Yeongdeungpo-gu Seoul 07336 (KR)
(72) Inventor: PARK, Giwon, Seoul 06772 (KR); BACK, Seoyoung, Seoul 06772 (KR); LEE, Seungmin, Seoul 06772 (KR); HONG, Jongwoo, Seoul 06772 (KR)
(74) Representative: Plasseraud IP
(86) International application number: PCT/KR2022/003155
(87) International publication number: WO 2022/186666

(57) **Abstract**

Proposed is a method for operation of a first device (100) in a wireless communication system. The method may comprise the steps of: establishing a PC5 radio resource control (RRC) connection with a second device; declaring an SL radio link failure (RLF) related to the PC5 RRC connection; and stopping, on the basis of the declared SL RLF, an Uu DRX timer related to the PC5 RRC connection.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication apparatuses require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL SOLUTION

An an embodiment, an operation method of a first device (100) in a wireless communication system is proposed. The method may include establishing a PC5 radio resource control (RRC) connection with a second device 200; declaring a radio link failure (SL RLF) related to the PC5 RRC connection; and, based on the declared SL RLF, stopping a Uu DRX timer related to the PC5 RRC connection.

### ADVANTAGEOUS EFFECTS

A UE can efficiently perform sidelink communication.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows an example of a declaration of an RLF and an example of stopping Uu DRX TimerSL operation based on the RLF, according to one embodiment of the present disclosure.
FIG. 9 shows an example of stopping Uu DRX TimerSL operation based on RLF and PC5 RRC connections, according to one embodiment of the present disclosure.
FIG. 10 shows a procedure for a first device to perform wireless communication, according to one embodiment of the present disclosure.
FIG. 11 shows a procedure for a second device to perform wireless communication, according to one embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### DESCRIPTION OF EXEMPLARY EMBODIMENTS

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, `when, if, or in case of' may be replaced with `based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques used herein that are not specifically described, reference may be made to wireless communication standards documents published prior to the filing of this specification.

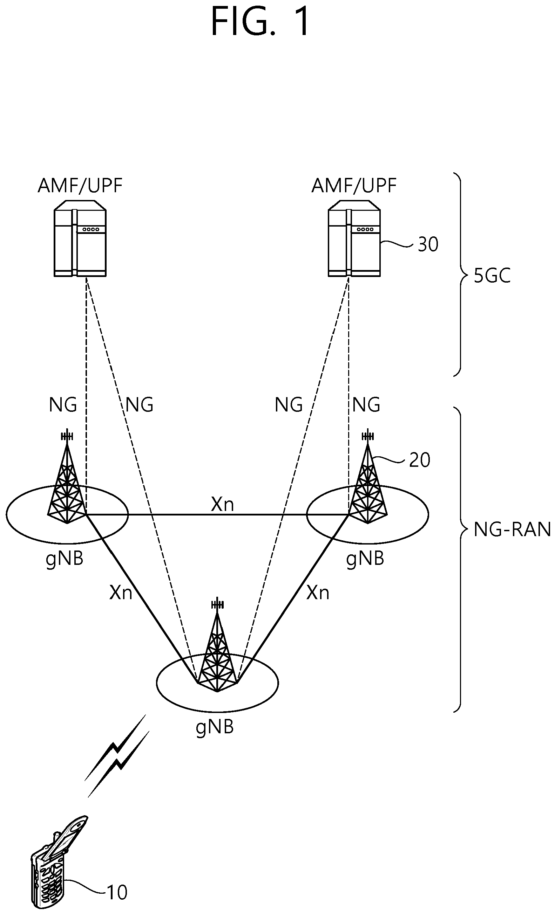

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

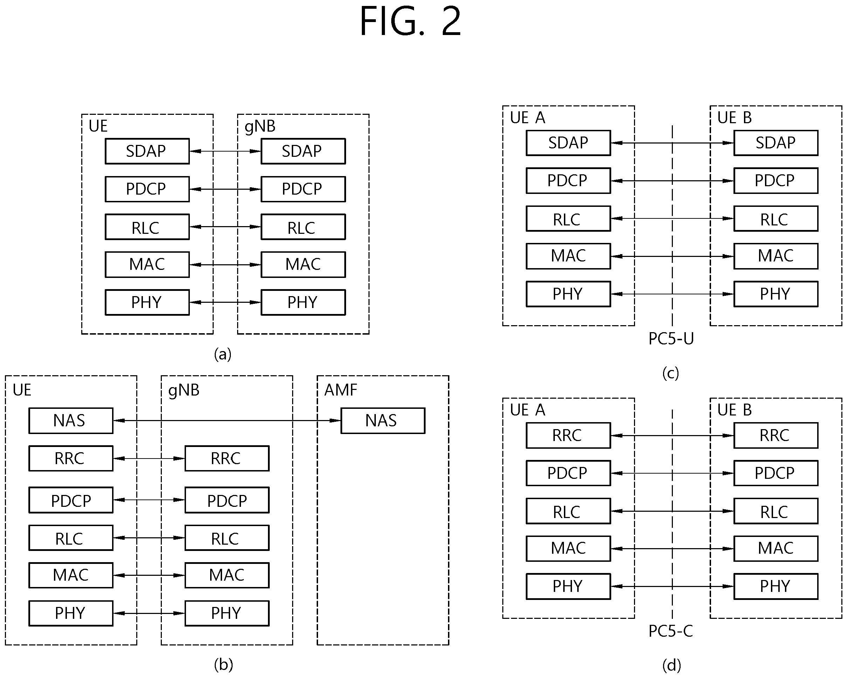

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a specific service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

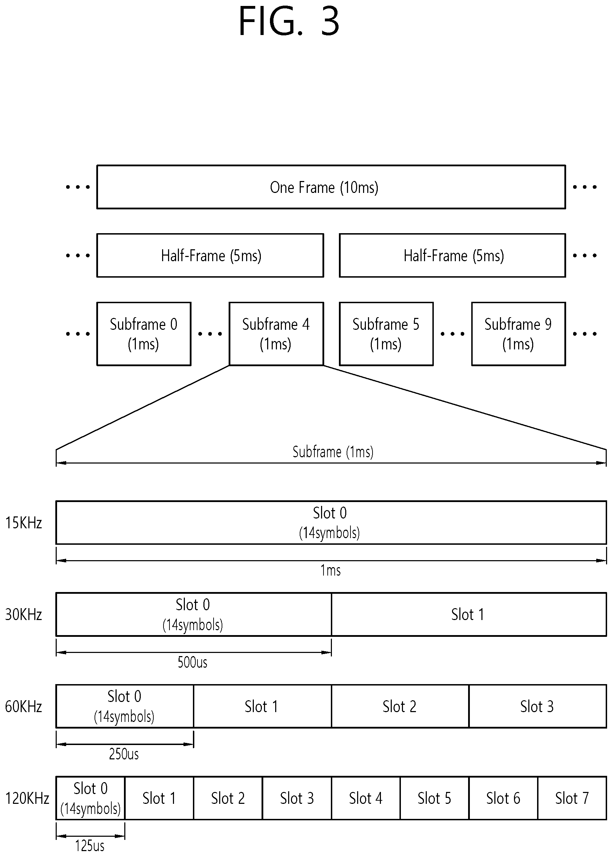

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

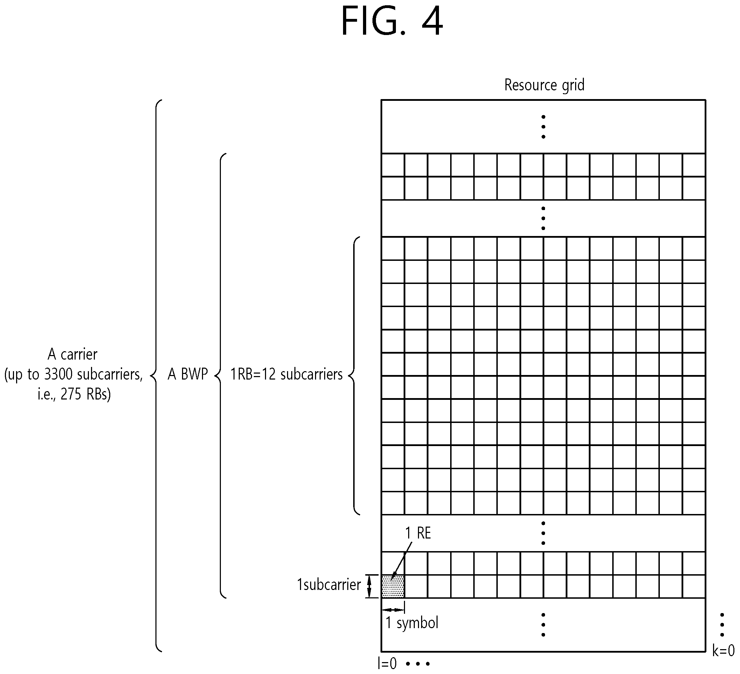

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

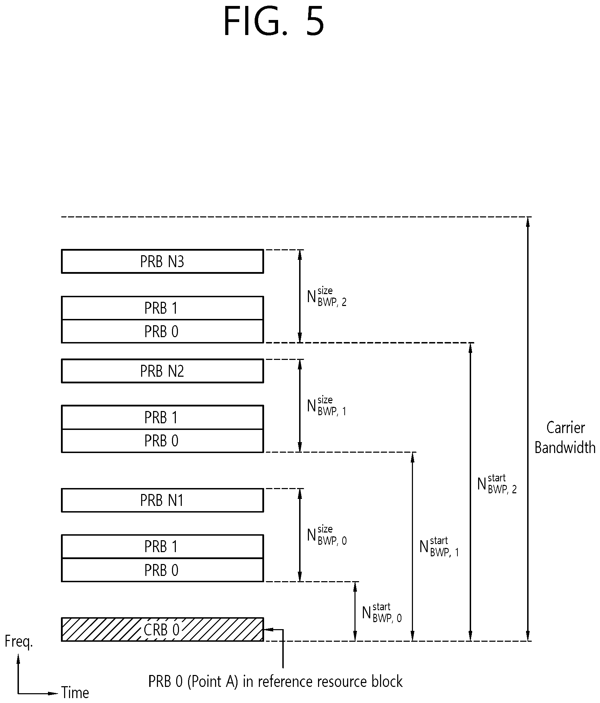

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

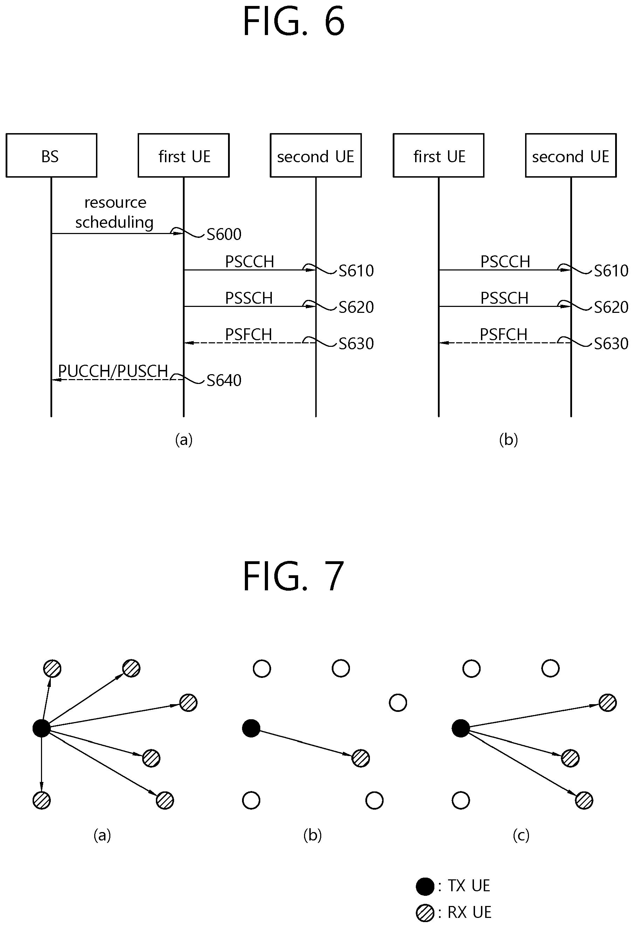

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl- MinTimeGapPSFCH -r 16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots related to a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots related to the PSFCH slot and sub-channel j, where M^{PSFCH}_{subch,slot}= M^{PSFCH}_{PRB,set}/(N_{subch}·N^{PSFCH}_{PSSCH}), 0 ≤ i ≤ N^{PSFCH}_{PSSCH}, 0 ≤ j < Nsubch, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are related to the starting sub-channel of the corresponding PSSCH
- N^{PSFCH}_{type} = N^{PSSCH}_{subch} and the N^{PSSCH}_{subch}·M^{PSFCH}_{subch,slot} PRBs are related to one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 5.

**[Table 5]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a m_{cs} value, for computing a value of cyclic shift α, as in Table 6 if the UE detects a SCI format 2-A with Cast type indicator field value of "01" or "10", or as in Table 7 if the UE detects a SCI format 2-B or a SCI format 2-A with Cast type indicator field value of "11". The UE applies one cyclic shift from a cyclic shift pair to a sequence used for the PSFCH transmission.

**[Table 6]**

| HARQ-ACK Value | 0 (NACK) | 1 (ACK) |
|---|---|---|
| Sequence cyclic shift | 0 | 6 |

**[Table 7]**

| HARQ-ACK Value | 0 (NACK) | 1 (ACK) |
|---|---|---|
| Sequence cyclic shift | 0 | N/A |

FIG. 7 shows three cast types, based on an embodiment of the present disclosure. The embodiment of FIG. 7 may be combined with various embodiments of the present disclosure.

Specifically, FIG. 7(a) shows a broadcast type of SL communication, FIG. 7(b) shows a unicast type of SL communication, and FIG. 7(c) shows a groupcast type of SL communication. In the case of unicast type SL communication, a UE may perform one-to-one communication with other UEs. In the case of groupcast type SL communication, a UE may perform SL communication with one or more UEs in a group to which it belongs. In various embodiments of the present disclosure, SL groupcast communication may be replaced by SL multicast communication, SL one-to-many communication, and the like.In this specification, the wording "configuration or definition" may be interpreted as being configured (in advance) by a base station or network (e.g., through predefined signaling (e.g., SIB signaling, MAC signaling, RRC signaling). For example, "A may be configured" may include "a base station or network (pre)configures/defines or informs the UE of A". Alternatively, the wording "configuration or definition" may be interpreted as being configured or defined in advance by the system. For example, "A may be configured" may include "A is configured/defined in advance by the system".

Referring to the standard document, some procedures and technical specifications related to this disclosure are shown in Tables 8 through 11.

**[Table 8]**

| 3GPP TS 38.321 V16.2.1 | |
|---|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. | |
| NOTE 1: If Sidelink resource allocation mode 1 is configured by RRC, a DRX functionality is not configured. RRC controls DRX operation by configuring the following parameters: | |
| | - *drx-onDurationTimer*: the duration at the beginning of a DRX cycle; |
| | - *drx-SlotOffset*: the delay before starting the *drx-onDurationTimer*; |
| | - *drx-InactivityTimer*: the duration after the PDCCH occasion in which a PDCCH indicates a new UL or DL transmission for the MAC entity; |
| | - *drx-RetransmissionTimerDL* (per DL HARQ process except for the broadcast process): the maximum duration until a DL retransmission is received; |
| | - *drx-RetransmissionTimerUL* (per UL HARQ process): the maximum duration until a grant for UL retransmission is received; |
| | - *drx-LongCycleStartOffset:* the Long DRX cycle and *drx-StartOffset* which defines the subframe where the Long and Short DRX cycle starts; |
| | - *drx-ShortCycle* (optional): the Short DRX cycle; |
| | - *drx-ShortCycleTimer* (optional): the duration the UE shall follow the Short DRX cycle; |
| | - *drx-HARQ-RTT-TimerDL* (per DL HARQ process except for the broadcast process): the minimum duration before a DL assignment for HARQ retransmission is expected by the MAC entity; |
| | - *drx-HARQ-RTT-TimerUL* (per UL HARQ process): the minimum duration before a UL HARQ retransmission grant is expected by the MAC entity; |
| | - *ps-Wakeup* (optional): the configuration to start associated *drx-onDurationTimer* in case DCP is monitored but not detected; |
| | - *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started; |
| | - *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started. |

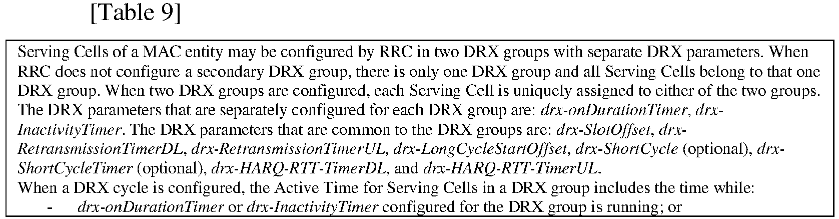

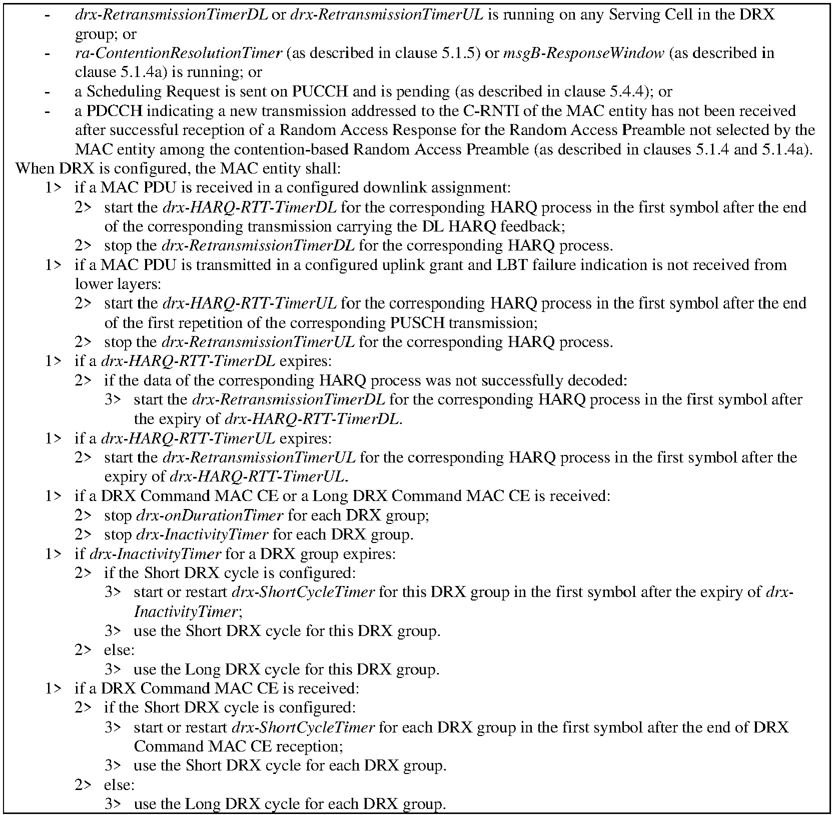

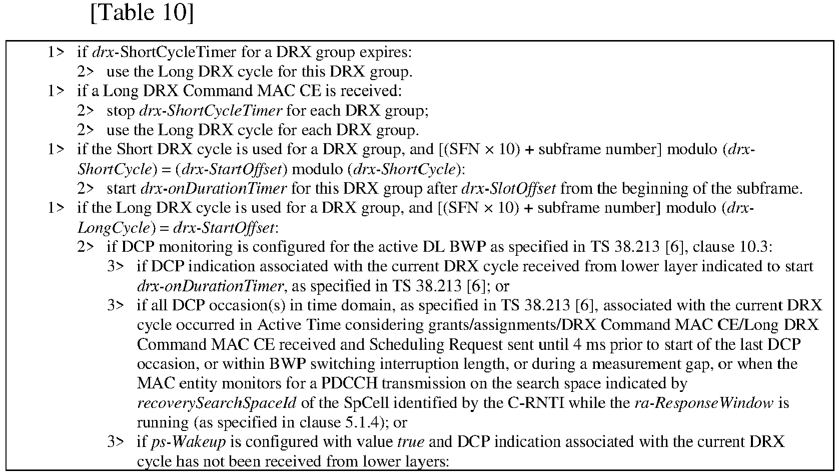

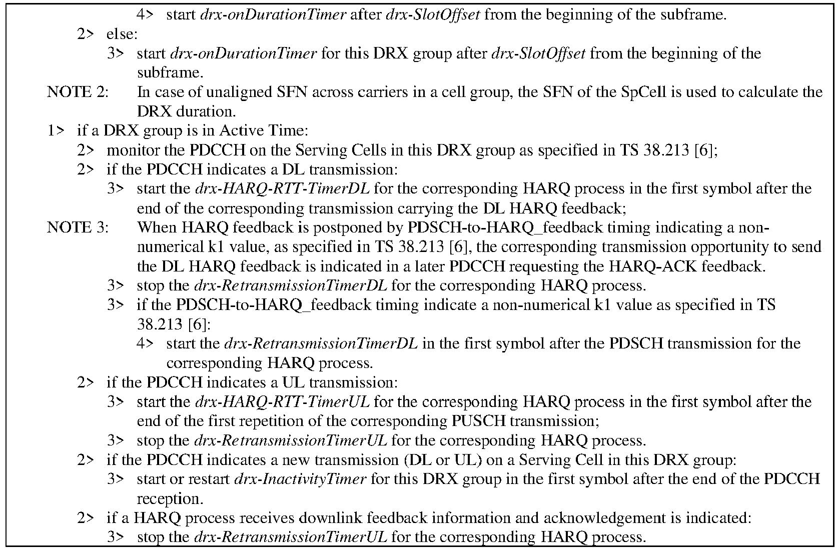

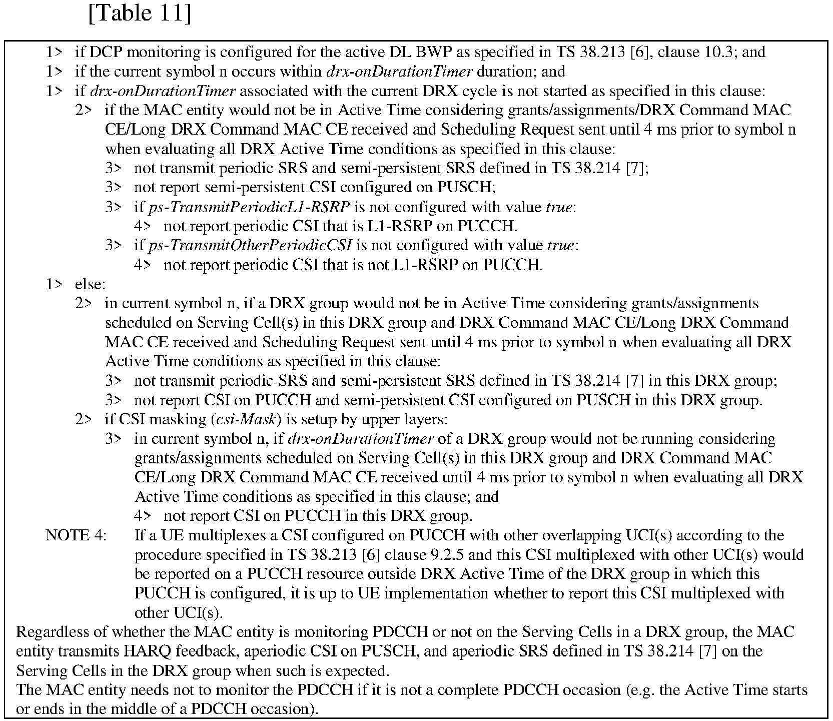

On the other hand, NR V2X in Release 16 did not support power-saving operation of devices, and Release 17 NR V2X will support power-saving operation of devices (e.g., power-saving devices).

For example, for power saving operation(e.g., SL (sidelink) DRX operation) of a UE, an SL DRX configuration (SL DRX cycle, SL DRX on-duration, SL DRX off-duration, timer to support SL DRX operation, etc.) to be used by a P-UE (power saving UE) may need to be defined. In addition, the operation of transmitting and receiving UEs during the on-duration (when sidelink reception/transmission can be performed) and off-duration (when they operate in sleep mode) may need to be defined.

The embodiment(s) of the present disclosure propose a method of operating the SL DRX when a UE declares a radio link failure (SL RLF). In the following description, "when, if, in case of" may be replaced by "based on".

According to one embodiment of the present disclosure (Proposal 1), if a transmitting UE declares an SL RLF because the following conditions are met, the transmitting UE may stop the operating Uu DRX hybrid automatic repeat request (HARQ) RTT TimerSL/Uu DRX retransmission TimerSL and stop monitoring for PDCCHs transmitted by a base station. Alternatively, for example, if a transmitting UE has not started the DRX HARQ RTT TimerSL/Uu DRX retransmission TimerSL, the transmitting UE may not start the timer upon declaring the SL RLF.

Table 12 shows the conditions under which a UE declares an SL RLF, according to one embodiment of the present disclosure.

**[Table 12]**

| | |
|---|---|
| ● Conditions for UE to declare SL RLF | |
| | ■ upon indication from sidelink RLC entity that the maximum number of retransmissions for a specific destination has been reached; or |
| | ■ upon T400 expiry for a specific destination; or |
| | ■ upon indication from sidelink MAC entity that the maximum number of consecutive HARQ DTX for a specific destination has been reached; or |
| | ■ upon integrity check failure indication from sidelink PDCP entity concerning SL-SRB2 or SL-SRB3 for a specific destination: |

Referring to Table 12, for example, a UE may declare an SL RLF based on an indication from an SL RLC layer, that the number of retransmissions for a specific destination has reached the maximum number of retransmissions. Alternatively, for example, a UE may declare an SL RLF based on the expiration of a T400 related to a specific destination. Or, for example, a UE may declare an SL RLF based on an indication from an SL MAC layer, that the number of consecutive HARQ DTXs related to a specific destination has reached the maximum number of consecutive HARQ DTXs. Alternatively, for example, a UE may declare an SL RLF based on an integrity check failure indication for SL-SRB2 or SL-SRB3 for a specific destination from an SL PDCP layer.

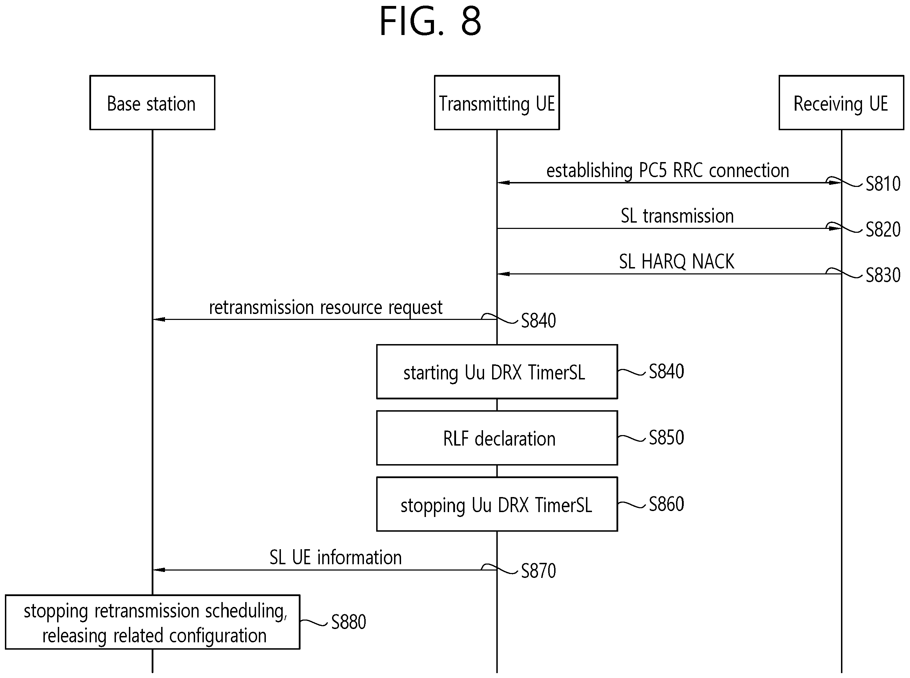

FIG. 8 shows an example of a declaration of an RLF and an example of stopping Uu DRX TimerSL operation based on the RLF, according to one embodiment of the present disclosure. The embodiment of FIG. 8 may be combined with various embodiments of the present disclosure.

Referring to FIG. 8, in step S810, a transmitting UE and a receiving UE may establish a PC5 RRC connection between each other. In step S820, the transmitting UE may perform an SL transmission to the receiving UE. For example, the SL transmission may be a transmission related to a first HARQ process ID. In step S830, the receiving UE may transmit to the transmitting UE an SL HARQ NACK for the SL transmission. For example, the receiving UE may fail to decode the SL transmission. The SL HARQ NACK may be transmitted to the transmitting UE based on the decoding failure.

In step S840, the transmitting UE may request retransmission resources for retransmission related to the first HARQ process ID from a base station based on the SL HARQ NACK. And, the transmitting UE may start a Uu DRX TimerSL to receive the retransmission resource. For example, the Uu DRX TimerSL may be a timer related to the first HARQ process ID (or, for example, the PC5 RRC connection), i.e., the Uu DRX TimerSL may be a timer for SL communication only related to the first HARQ process ID, i.e., the Uu DRX TimerSL may not be related to a second HARQ process ID different from the first HARQ process ID.

In step S850, the transmitting UE may declare an SL RLF related to the first HARQ process ID (or, for example, the PC5 RRC connection), based on conditions being met according to various embodiments of the present disclosure. In step S860, the transmitting UE may stop the Uu DRX TimerSL related to the first HARQ process ID (or, for example, the PC5 RRC connection) based on the declaration of the SL RLF, i.e., the transmitting UE may stop monitoring the DCI (or, for example, PDCCH) related to the requested retransmission resource.

In step S870, the transmitting UE may transmit SL UE information (e.g., SidelinkUEInformation) to the base station. For example, the SL UE information may include information according to various embodiments of the present disclosure. For example, the SL UE information may include information related to the first HARQ process ID and/or information related to a source/destination identifier pair of the transmitting UE and the receiving UE. In step S880, the base station may stop scheduling retransmissions related to the first HARQ process ID (or, for example, the PC5 RRC connection) based on the SL UE information; and/or, the base station may release configurations related to the first HARQ process ID. For example, the configurations may include an SL DRB configuration related to the first HARQ process ID or an SL DRX configuration related to the first HARQ process ID.

According to one embodiment of the present disclosure, when an SL RLF is declared, a transmitting UE may only stop a Uu DRX timerSL related to a HARQ process ID that is related to (or has a linkage to) an SL process (or SL process ID) operating on the PC5 RRC connection (or PC5 unicast link) on which the SL RLF is declared. For example, the Uu DRX HARQ RTT TimerSL or Uu DRX Retransmission TimerSL may be timers for monitoring SL mode 1 DCI.

For example, Uu DRX HARQ RTT TimerSL and Uu DRX retransmission timerSL may be operated on a per HARQ process ID basis. That is, for example, in the event of an SL RLF, it may not be allowed, for a Uu DRX timerSL (e.g., Uu DRX HARQ RTT TimerSL, or Uu DRX Retransmission TimerSL) operating on a different HARQ process ID with the HARQ process ID related to (or linked to) a specific SL process (or SL process ID) operating on the PC5 unicast link where the SL RLF occurred, to be stopped.

According to one embodiment of the present disclosure, a transmitting UE may include the following information in SidelinkUEInformation (or, SL UE information) to be forwarded to a base station when an SL RLF is declared under the conditions referred to in the present disclosure.

For example, an information element (IE) of the SL UE information may include at least one of the source/destination ID pair information (or, PC5 link ID) from which the SL RLF occurred, the SL process ID operating on the PC5 RRC connection (or, PC5 unicast link) on which the SL RLF was declared, and/or the HARQ process ID related to (or linked to) the SL process ID operating on the PC5 RRC connection (or, PC5 unicast link) on which the SL RLF was declared.

Table 13 shows HARQ process IDs, according to one embodiment of the present disclosure.

**[Table 13]**

| |
|---|
| For configured sidelink grants, the HARQ Process ID associated with the first slot of a SL transmission is derived from the following equation: |
| HARQ Process ID = [floor(CURRENT_slot / sl-PeriodCG)] modulo sl-NrOfHARQ-Processes + sl-HARQ-ProcID-offset |
| where CURRENT_slot = (SFN × numberOfSlotsPerFrame + slot number in the frame), and numberOfSlotsPerFrame refer to the number of consecutive slots per frame as specified in TS 38.211 [8]. |
| For a sidelink grant on the PDCCH (DG DCI) |
| if a sidelink grant has been received on the PDCCH for the MAC entity's SLCS-RNTI: |
| 2> if PDCCH contents indicate retransmission(s) for the identifed HARQ process ID that has been set for an activated configured sidelink grant identified by sl-ConfigIndexCG: |
| 3> use the received sidelink grant to determine PSCCH duration(s) and PSSCH duration(s) for one or more retransmissions of a single MAC PDU according to clause 8.1.2 of TS 38.214 [7]. |

Tables 14 through 16 show SL process IDs, according to one embodiment of the present disclosure.

**[Table 14]**

| |
|---|
| Sidelink transmission information: Sidelink transmission information included in a SCI for a SL-SCH transmission as specified in clause 8.3 and 8.4 of TS 38.212 [9] consists of Sidelink HARQ information including NDI, RV, Sidelink process ID, HARQ feedback enabled/disabled indicator, Sidelink identification information including cast type indicator, Source Layer-1 ID and Destination Layer-1 ID, and Sidelink other information including CSI request, a priority, a communication range requirement and Zone ID. |
| Sidelink HARQ operation |
| 5.22.1.3.1 Sidelink HARQ Entity |
| The MAC entity includes at most one Sidelink HARQ entity for transmission on SL-SCH, which maintains a number of parallel Sidelink processes. |
| The maximum number of transmitting Sidelink processes associated with the Sidelink HARQ Entity is 16. A sidelink process may be configured for transmissions of multiple MAC PDUs. For transmissions of multiple MAC PDUs with Sidelink resource allocation mode 2, the maximum number of transmitting Sidelink processes associated with the Sidelink HARQ Entity is 4. |
| A delivered sidelink grant and its associated Sidelink transmission information are associated with a Sidelink process. Each Sidelink process supports one TB. |

**[Table 15]**

| |
|---|
| For each sidelink grant, the Sidelink HARQ Entity shall: |
| 1> if the MAC entity determines that the sidelink grant is used for initial transmission as specified in clause 5.22.1.1; or |
| 1> if the sidelink grant is a configured sidelink grant and no MAC PDU has been obtained in a *sl-PeriodCG* of the configured sidelink grant: |
| NOTE 1: Void. |
| 2> (re-)associate a Sidelink process to this grant, and for the associated Sidelink process: |
| NOTE lA: The Sidelink HARQ Entity will associate the selected sidelink grant to the Sidelink process determined by the MAC entity. |
| 3> obtain the MAC PDU to transmit from the Multiplexing and assembly entity, if any; |
| 3> if a MAC PDU to transmit has been obtained: |
| 4> if a HARQ Process ID has been set for the sidelink grant: |
| 5> (re-)associate the HARQ Process ID corresponding to the sidelink grant to the Sidelink process; |
| NOTE 1a: There is one-to-one mapping between a HARQ Process ID and a Sidelink process in the MAC entity configured with Sidelink resource allocation mode 1. |
| 4> determines Sidelink transmission information of the TB for the source and destination pair of the MAC PDU as follows: |
| 5> set the Source Layer-1 ID to the 8 LSB of the Source Layer-2 ID of the MAC PDU; |
| 5> set the Destination Layer-1 ID to the 16 LSB of the Destination Layer-2 ID of the MAC PDU; |
| 5> (re-)associate the Sidelink process to a Sidelink process ID; |
| NOTE lb: How UE determine Sidelink process ID in SCI is left to UE implementation for NR sidelink. |
| 5> consider the NDI to have been toggled compared to the value of the previous transmission corresponding to the Sidelink identification information and the Sidelink process ID of the MAC PDU and set the NDI to the toggled value; |

**[Table 16]**

| |
|---|
| Sidelink HARQ operation |
| 5.22.2.2.1 Sidelink HARQ Entity |
| There is at most one Sidelink HARQ Entity at the MAC entity for reception of the SL-SCH, which maintains a number of parallel Sidelink processes. |
| Each Sidelink process is associated with SCI in which the MAC entity is interested. This interest is determined by the Sidelink identification information of the SCI. The Sidelink HARQ Entity directs Sidelink transmission information and associated TBs received on the SL-SCH to the corresponding Sidelink processes. |
| The number of Receiving Sidelink processes associated with the Sidelink HARQ Entity is defined in TS 38.306 [5]. |
| For each PSSCH duration, the Sidelink HARQ Entity shall: |
| 1> for each SCI valid for this PSSCH duration: |
| 2> if the NDI has been toggled compared to the value of the previous received transmission corresponding to the Sidelink identification information and the Sidelink process ID of the SCI or this is the very first received transmission for the pair of the Sidelink identification information and the Sidelink process ID of the SCI: |
| 3> if there is a Sidelink process associated with the Sidelink identification information and the Sidelink process ID of the SCI: |
| 4> consider the Sidelink process as unoccupied; |
| 4> flush the soft buffer for the Sidelink process. |
| 3> allocate the TB received from the physical layer and the associated Sidelink identification information and Sidelink process ID to an unoccupied Sidelink process; |
| 3> associate the Sidelink process with the Sidelink identification information and the Sidelink process ID of this SCI and consider this transmission to be a new transmission. |
| NOTE 1: When a new TB arrives, the Sidelink HARQ Entity allocates the TB to any unoccupied Sidelink process. If there is no unoccupied Sidelink process in the Sidelink HARQ entity, how to manage receiving Sidelink processes is up to UE implementation. |
| 1> for each Sidelink process: |
| 2> if the NDI has not been toggled compared to the value of the previous received transmission corresponding to the Sidelink identification information and the Sidelink process ID of the SCI for the Sidelink process according to its associated SCI: |
| 3> allocate the TB received from the physical layer to the Sidelink process and consider this transmission to be a retransmission. |
| NOTE 2: A single sidelink process can only be (re-)associated to a single combination of Sidelink identification information and Sidelink process ID at a time and a single combination of Sidelink identification information and Sidelink process ID can only be (re-)associated to a single sidelink process at a time. |

According to one embodiment of the present disclosure, a base station, based on information contained in the SL UE information (e.g., sidelinkUEInformation) transmitted by a transmitting UE, may determine a Uu DRX timerSL (for SL mode 1 DCI monitor purposes) at which the transmitting UE will declare and stop an SL RLF (e.g., Uu DRX HARQ RTT TimerSL, or, Uu DRX Retransmission TimerSL), and stop the retransmission scheduling operation of the SL transmission related to (the SL RLF, or, the SL RLF-related HARQ process ID), or, terminate the SL data radio bearer (DRB) configuration and associated Uu DRX timerSL configuration related to (the SL RLF, or, the SL RLF-related HARQ process ID).

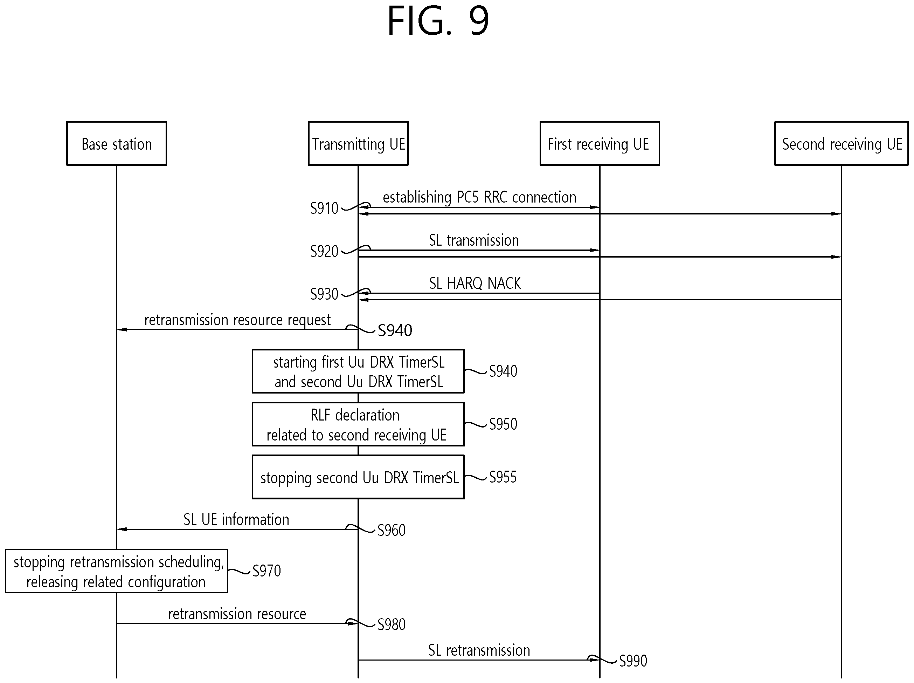

FIG. 9 shows an example of stopping Uu DRX TimerSL operation based on RLF and PC5 RRC connections, according to one embodiment of the present disclosure. The embodiment of FIG. 9 may be combined with various embodiments of the present disclosure.

Referring to FIG. 9, at step S910, a transmitting UE may establish a PC5 RRC connection with each of a first receiving UE and a second receiving UE. For example, the PC5 RRC connection between the transmitting UE and the first receiving UE may be a first PC5 RRC connection, and the PC5 RRC connection between the transmitting UE and the second receiving UE may be a second PC5 RRC connection. In step S920, the transmitting UE may perform an SL transmission to the first receiving UE and the second receiving UE. For example, the SL transmission may be a transmission related to a first HARQ process ID and a second HARQ process ID, respectively. In step S930, the first receiving UE and the second receiving UE may each transmit an SL HARQ NACK for the SL transmission to the transmitting UE. For example, the first receiving UE and the second receiving UE may fail to decode the SL transmission. The respective SL HARQ NACKs may be transmitted to the transmitting UE based on the decoding failure.

In step S940, the transmitting UE may request retransmission resources for retransmission related to the first HARQ process ID and retransmission resources for retransmission related to the second HARQ process ID from a base station based on the respective SL HARQ NACK. And, the transmitting UE may start a first Uu DRX TimerSL and ad second Uu DRX TimerSL to receive the retransmission resources. For example, the first Uu DRX TimerSL may be a timer related to the first HARQ process ID, and the second Uu DRX TimerSL may be a timer related to the second HARQ process ID.

In step S950, the transmitting UE may declare an SL RLF related to the second HARQ process ID, based on conditions being met according to various embodiments of the present disclosure. In step S955, the transmitting UE may stop the second Uu DRX TimerSL related to the second HARQ process ID, based on the declaration of the SL RLF, i.e., the transmitting UE may stop monitoring the DCI (or, PDCCH) related to the retransmission resources for retransmission related to the second HARQ process ID.

In step S960, the transmitting UE may transmit SL UE information (e.g., SidelinkUEInformation) to the base station. For example, the SL UE information may include information according to various embodiments of the present disclosure. For example, the SL UE information may include information related to the second HARQ process ID and/or information related to a source/destination ID pair of the transmitting UE and the second receiving UE, and the like. In step S970, the base station may stop scheduling retransmissions related to the second HARQ process ID based on the SL UE information; and/or the base station may release configurations related to the second HARQ process ID. For example, the configurations may include an SL DRB configuration related to the second HARQ process ID or an SL DRX configuration related to the second HARQ process ID. On the other hand, the base station may still continue to perform scheduling of retransmissions related to the first HARQ process ID, and may maintain configurations related to the first HARQ process ID.

In step S980, the base station may transmit to the transmitting UE information related to a retransmission resource for retransmission related to the second HARQ process ID. For example, the information related to the retransmission resource may be transmitted via DCI (or, PDCCH).

In step S990, the transmitting UE may, based on the retransmission resource, perform a retransmission related to the first HARQ process ID to the first receiving UE.

According to one embodiment of the present disclosure, when a transmitting UE establishes a PC5 RRC connection with a receiving UE, a plurality of SL processes may be performed based on the PC5 RRC connection. For example, a first SL process may be related to a first SL process ID, and a second SL process may be related to a second SL process ID. For example, the HARQ process ID and the SL process ID may have a one-to-one mapping relationship, i.e., according to an embodiment of the present disclosure, when there are a plurality of SL processes performed between a transmitting UE and a receiving UE, an SL RLF may be declared for only some of the plurality of SL processes. That is, for example, when an SL RLF related to the first SL process is declared, the operation related to the second SL process may be maintained. Also, for example, based on the SL RLF, the Uu DRX TimerSL related to the first HARQ process ID related to the first SL process ID may be stopped, while the Uu DRX TimerSL related to the second SL process ID may continue to operate despite the SL RLF.

According to one embodiment of the present disclosure (Proposal 2), a receiving UE may declare an SL RLF if the following conditions are met. For example, based on the SL RLF, the receiving UE may stop the operating SL DRX on-duration timer, SL DRX inactivity timer, SL DRX HARQ RTT timer, and SL DRX retransmission timer, and may stop monitoring the SL signals, SL channels, etc. (e.g., PSCCH, PSSCH, SL-SSB, etc.) transmitted by a transmitting UE. Alternatively, for example, the receiving UE may stop transmitting PSFCH, SL-SSB based on the SL RLF. Or, for example, if the receiving UE has not started an SL DRX on-duration timer, an SL DRX inactivity timer, an SL DRX HARQ RTT timer, an SL DRX retransmission timer, the receiving UE may not start the timers upon the occurrence of the SL RLF.

Table 17 indicates the conditions under which a UE declares an SL RLF, according to one embodiment of the present disclosure.

**[Table 17]**

| | |
|---|---|
| ■ Conditions for UE to declare SL RLF | |
| | ■ upon indication from sidelink RLC entity that the maximum number of retransmissions for a specific destination has been reached; or |
| | ■ upon T400 expiry for a specific destination; or |
| | ■ upon indication from sidelink MAC entity that the maximum number of consecutive HARQ DTX for a specific destination has been reached; or |
| | ■ upon integrity check failure indication from sidelink PDCP entity concerning SL-SRB2 or SL-SRB3 for a specific destination: |

Referring to Table 17, for example, a UE may declare an SL RLF based on an indication from the SL RLC layer that the number of retransmissions for a specific destination has reached the maximum number of retransmissions. Alternatively, for example, a UE may declare an SL RLF based on the expiration of a T400 related to a specific destination. Or, for example, a UE may declare an SL RLF based on an indication from an SL MAC layer that the number of consecutive HARQ DTXs related to a specific destination has reached the maximum number of consecutive HARQ DTXs. Alternatively, for example, a UE may declare an SL RLF based on an integrity check failure indication for SL-SRB2 or SL-SRB3 for a specific destination from an SL PDCP layer.

According to one embodiment of the present disclosure, a receiving UE may only stop an SL DRX timer (e.g., SL DRX on-duration timer, SL DRX inactivity timer) related to a PC5 RRC connection (or PC5 unicast link) for which an SL RLF has been declared.

That is, for example, upon the occurrence of an SL RLF, a receiving UE may not be allowed to stop an SL DRX timer (e.g., SL DRX on-duration timer, SL DRX inactivity timer) that is operating on a PC5 RRC link other than the PC5 unicast link on which the SL RLF occurred.

Further, for example, a receiving UE may only stop SL DRX timers (e.g., SL DRX on-duration timer, SL DRX inactivity timer, SL DRX HARQ RTT timer, SL DRX retransmission timer) that are related to (or have a link to) a specific SL process (or SL process ID) operating on a PC5 RRC connection (or PC5 unicast link) for which an SL RLF has been declared. In other words, it may not be allowed to stop SL DRX timers that are not related to a specific SL process on the receiving UE.

For example, an SL DRX timer (e.g., SL DRX HARQ RTT timer, SL DRX retransmission timer) may be operated on a per SL process ID basis, and upon the occurrence of an SL RLF, it may not be allowed, for an SL DRX timer (e.g., SL DRX HARQ RTT timer, SL DRX retransmission timer) operating on any SL process except the specific SL process (or, SL process ID) operating on the PC5 unicast link where the SL RLF occurred, to be stopped.

According to one embodiment of the present disclosure, a receiving UE may include the following information in SL UE information (e.g., SidelinkUEInformation) to be transmitted to a base station when an SL RLF is declared under the conditions mentioned in the present disclosure.

For example, an IE of the SL UE information may include at least one of source/destination ID pair information (or PC5 link ID) from which the SL RLF occurred, an SL process ID operating on the PC5 RRC connection (or PC5 unicast link) that declared the SL RLF, and/or a HARQ process ID related to (or having a link to) the SL process ID operating on the PC5 RRC connection (or PC5 unicast link) that declared the SL RLF.

According to an embodiment of the present disclosure, based on information included in SL UE information (e.g., sidelinkUEInformation) which a receiving UE transmits, a base station may determine an SL DRX timer (e.g., SL DRX on-duration timer, SL DRX inactivity timer, SL DRX HARQ RTT timer, SL DRX retransmission timer) at which the receiving UE may declare and stop SL RLF per PC5 unicast link (or, per PC5 RRC connection, or, "per SL process ID per PC5 RRC connection (or, PC5 unicast link)"), and release SL DRX configuration related to (the SL RLF, or, a HARQ process ID related to the SL RLF) and SL DRX timer configuration.

The SL DRX configurations referred to in the present disclosure may include at least one or more of the parameters in Table 18. Table 18 shows SL DRX configurations, according to one embodiment of the present disclosure.

**[Table 18]**

| | |
|---|---|
| ■ Sidelink DRX configurations | |
| | ✔ *SL drx-onDurationTimer*: *the duration at the beginning of a DRX Cycle;* |
| | ✔ *SL drx-SlotOffset: the delay before starting the drx-onDurationTimer;* |
| | ✔ *SL drx-InactivityTimer: the duration after the PSCCH occasion in which a PSCCH indicates a new SL transmission for the MAC entity;* |
| | ✔ *SL drx-RetransmissionTimer (per Sidelink process): the maximum duration until a retransmission is received;* |
| | ✔ *SL drx-HARQ-RTT-Timer (per Sidelink process): the minimum duration before PSCCH (Sideink Control Information*) & *PSSCH for SL HARQ retransmission is expected by the MAC entity;* |
| | ✔ *SL drx-LongCycleStartOffset: the Long DRX cycle and drx-StartOffset which defines the subframe where the Long and Short DRX Cycle starts;* |
| | ✔ *SL drx-ShortCycle (optional): the Short DRX cycle;* |
| | ✔ *SL drx-ShortCycleTimer (optional): the duration the UE shall follow the Short DRX cycle; SL drx-HARQ-RTT-Timer (per Sidelink process): the minimum duration before an assignment for HARQ retransmission is expected by the MAC entity.* |

The following SL DRX timers mentioned in this disclosure may be used for the following purposes.

SL DRX on-duration timer: Indicates the period of time during which a UE performing SL DRX operation should operate as the default active time to receive PSCCH/PSSCH from other UE.

SL DRX inactivity timer: may represent an interval that extends an SL DRX on-duration interval, which is an interval during which a UE performing SL DRX operation must operate as active by default to receive PSCCH/PSSCH from other UE. That is, an SL DRX on-duration timer may be extended by the SL DRX inactivity timer interval. Furthermore, when a UE receives a new packet (new PSSCH transmission) from other UE, the UE may extend the SL DRX on-duration timer by starting an SL DRX inactivity timer.

SL DRX HARQ RTT timer: may indicate an interval during which a UE performing SL DRX operation may operate in sleep mode until it receives a retransmission packet (or PSSCH assignment) from other UE. That is, if a UE starts the SL DRX HARQ RTT timer, the UE may determine that other UE will not transmit a sidelink retransmission packet to it until the SL DRX HARQ RTT timer expires and may operate in sleep mode during that timer.

SL DRX retransmission timer: may indicate an interval of time during which a UE performing SL DRX operation is active to receive retransmission packets (or PSSCH assignments) transmitted by other UE. During this timer period, a UE may monitor a reception of retransmission sidelink packets (or PSSCH allocations) transmitted by other UE.

The following Uu DRX timers mentioned in this disclosure may be used for the following purposes.

Uu DRX HARQ RTT TimerSL: indicates an interval during which a UE performing Uu DRX operation does not need to monitor DCI (PDCCH) for SL mode 1 operation transmitted by a base station. While this timer is running, a UE may not need to monitor a PDCCH for SL mode 1 operation.

Uu DRX retransmission TimerSL: indicates an interval during which a UE performing Uu DRX operation monitors DCI (PDCCH) for SL mode 1 operation transmitted by a base station. While this timer is running, a UE may monitor a PDCCH for SL mode 1 operation transmitted by a base station.

In the following description, the names of the timers (SL DRX On-Duration Timer, SL DRX Inactive Timer, SL HARQ RTT Timer, SL DRX Retransmission Timer, Uu DRX HARQ RTT TimerSL, Uu DRX Retransmission TimerSL, etc.) are exemplary, and timers that perform the same/similar functions based on what is described in each timer can be considered the same/similar timer regardless of the name.

The proposals in this disclosure may be extended to parameters (and timers) included in default/common SL DRX configurations or default/common SL DRX patterns or default/common SL DRX configurations, as well as parameters (and timers) included in UE pair specific SL DRX configurations or UE pair specific SL DRX patterns or UE pair specific SL DRX configurations.

Furthermore, for example, an on-duration term referred to in the present disclosure may be extended to an active time interval, and an off-duration term may be extended to a sleep time interval. For example, an active time may refer to a period of time when a UE is operating in a wake up state (RF module is on) to receive/transmit radio signals. For example, sleep time may refer to an interval during which a UE operates in a sleep mode state (RF module is off) to conserve power. For example, a sleep period does not imply that a transmitting UE is obligated to operate in sleep mode, i.e., the UE may be allowed to operate in active time for a short period of time to perform a sensing operation/transmission operation if necessary, even during a sleep period.

Further, for example, whether (some of) the proposed schemes/rules of this disclosure apply and/or the related parameters (e.g., thresholds) may be configured specifically (or differently or independently) depending on the resource pool, congestion level, service priority (and/or type), requirements (e.g., latency, reliability), traffic type (e.g., (aperiodic) generation), SL transport resource allocation mode (Mode 1, Mode 2), etc.

For example, whether to apply the proposals of the present disclosure (and/or related parameter configuration value) may be configured specifically (and/or, independently and/or differently) for at least one of a resource pool, service/packet type (and/or priority), QoS requirement (e.g., URLLC/EMBB traffic, reliability, latency), cast type (e.g., unicast, groupcast, broadcast), (resource pool) congestion level (e.g., CBR), SL HARQ feedback mode (e.g., NACK only feedback, ACK/NACK feedback), a HARQ feedback enabled MAC PDU (and/or a HARQ feedback disabled MAC PDU) transmission case, whether PUCCH based SL HARQ feedback reporting operation is configured, a case where pre-emption (and/or re-evaluation) (or, -based resource reselection) is performed, (L2 or L1) (source and/or destination) ID, PC5 RRC connection/link, a case where an SL DRX is performed, SL mode type (resource allocation mode 1, resource allocation mode 2), a case where (a)periodic resource reservation is performed.

For example, the term active time as used in the present disclosure may refer to a predefined amount of time for a UE to receive sidelink signaling or sidelink data from another UE, or a period of time, or a specific timer (SL DRX retransmission timer, SL DRX inactivity timer, or a timer to ensure a receiving UE to operate as an active time in DRX operation) time, during which a UE is active.

Further, for example, whether the proposals and proposed rules in this disclosure apply (and/or the associated parameter configuration values) may also apply to mmWave SL operation.

According to an embodiment proposed in this disclosure, when a plurality of SL processes are performed between UEs performing SL DRX operation, and an SL RLF is declared for some of the SL processes, the transmitting UE and a base station can distinguish a specific SL process for which an SL RLF has occurred among the plurality of SL processes. Therefore, the transmitting UE can continue to operate the SL processes for which the SL RLF has not occurred, and can stop only the Uu DRX TimerSL corresponding to the SL RLF, thereby maintaining efficient SL communication and generating a power-saving effect of the DRX operation. In addition, the base station can stop the retransmission scheduling and cancel the SL DRB and SL DRX configurations related to the HARQ process corresponding to the SL RLF while maintaining the operation related to the SL process in which the SL RLF does not occur, so that the power-saving effect of the DRX operation can be generated while maintaining efficient Mode 1 SL communication.

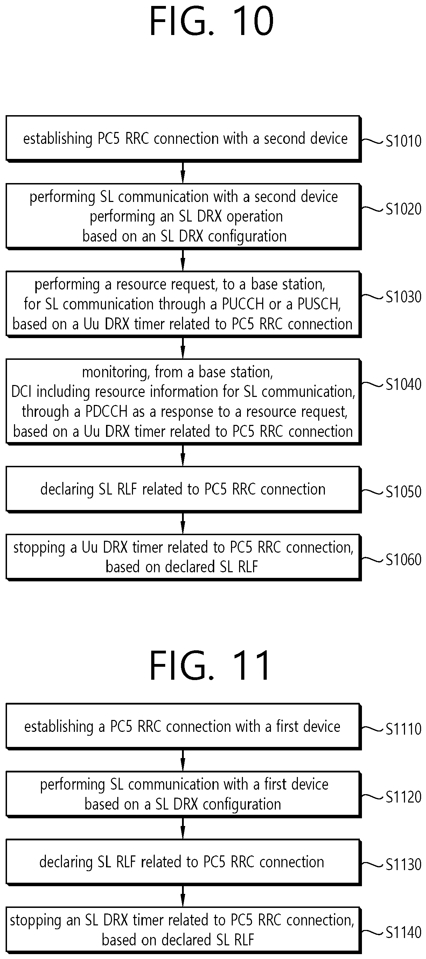

FIG. 10 shows a procedure for a first device to perform wireless communication, according to one embodiment of the present disclosure. The embodiment of FIG. 10 may be combined with various embodiments of the present disclosure.

Referring to FIG. 10, in step S1010, a first device may establish PC5 radio resource control, RRC, connection with a second device. In step S1020, the first device may perform sidelink, SL, communication with the second device performing an SL discontinuous reception, DRX, operation based on an SL DRX configuration. In step S 1030, the first device may perform a resource request, to a base station, for the SL communication through a physical uplink control channel, PUCCH, or a physical uplink shared channel, PUSCH, based on a Uu DRX timer related to the PC5 RRC connection. In step S1040, the first device may monitor, from the base station, downlink control information, DCI, including resource information for the SL communication, through a physical downlink control channel, PDCCH, as a response to the resource request, based on the Uu DRX timer related to the PC5 RRC connection. In step S 1050, the first device may declare SL radio link failure, RLF, related to the PC5 RRC connection. In step S1060, the first device may stop the Uu DRX timer related to the PC5 RRC connection, based on the declared SL RLF.

For example, stop of a Uu DRX timer not related to the PC5 RRC connection may be not allowed, based on the declared SL RLF.

For example, additionally, the first device may stop monitoring for the DCI related to the PC5 RRC connection.

For example, stop of monitoring for DCI not related to the PC5 RRC connection may be not allowed.

For example, additionally, the first device may transmit, to the base station, SL UE information related to the SL RLF. For example, the SL UE information may include at least one of a hybrid automatic repeat request, HARQ, process identifier, ID, related to the PC5 RRC connection, a source/destination ID pair related to the PC5 RRC connection, or an SL process ID related to the PC5 RRC connection.

For example, a retransmission scheduling operation related to the PC5 RRC connection may be stopped by the base station, based on the SL UE information.

For example, an SL data radio bearer, DRB, configuration related to the PC5 RRC connection or a configuration related to the Uu DRX timer related to the PC5 RRC connection may be released by the base station, based on the SL UE information.

For example, the SL RLF may be declared based on at least one of: i) a number of retransmissions for a destination of the PC5 RRC connection reaching a maximum retransmission number; ii) T400 for the destination of the PC5 RRC connection being expired; iii) a number of consecutive occurrences of HARQ discontinuous transmission, DTX, for the destination of the PC5 RRC connection reaching a maximum number of consecutive occurrences of HARQ DTX; or iv) a failure of an integrity check for a signaling radio bearer, SRB, for the PC5 RRC connection.

For example, the Uu DRX timer may include a Uu DRX HARQ round trip time, RTT, TimerSL or a Uu DRX Retransmission TimerSL.

For example, the Uu DRX timer may be related to a HARQ process ID related to SL data transmitted through the SL communication.

For example, a HARQ process ID related to the PC5 RRC connection may be determined based on a current slot at which the SL communication is performed.

For example, an SL process related to the PC5 RRC connection and a HARQ process ID related to the PC5 RRC connection may have a one to one mapping relationship.

For example, an SL process ID related to the SL process and the HARQ process ID may have a one to one mapping relationship.

The above-described embodiments may be applied to various devices described below. First, a processor 102 of a first device 100 may establish PC5 radio resource control, RRC, connection with a second device 200. And, the processor 102 of the first device 100 may control a transceiver 106 to perform sidelink, SL, communication with the second device 200 performing an SL discontinuous reception, DRX, operation based on an SL DRX configuration. And, the processor 102 of the first device 100 may control the transceiver 106 to perform a resource request, to a base station 300, for the SL communication through a physical uplink control channel, PUCCH, or a physical uplink shared channel, PUSCH, based on a Uu DRX timer related to the PC5 RRC connection. And, the processor 102 of the first device 100 may monitor, from the base station 300, downlink control information, DCI, including resource information for the SL communication, through a physical downlink control channel, PDCCH, as a response to the resource request, based on the Uu DRX timer related to the PC5 RRC connection. And, the processor 102 of the first device 100 may declare SL radio link failure, RLF, related to the PC5 RRC connection. And, the processor 102 of the first device 100 may stop the Uu DRX timer related to the PC5 RRC connection, based on the declared SL RLF.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: establish PC5 radio resource control, RRC, connection with a second device; perform sidelink, SL, communication with the second device performing an SL discontinuous reception, DRX, operation based on an SL DRX configuration; perform a resource request, to a base station, for the SL communication through a physical uplink control channel, PUCCH, or a physical uplink shared channel, PUSCH, based on a Uu DRX timer related to the PC5 RRC connection; monitor, from the base station, downlink control information, DCI, including resource information for the SL communication, through a physical downlink control channel, PDCCH, as a response to the resource request, based on the Uu DRX timer related to the PC5 RRC connection; declare SL radio link failure, RLF, related to the PC5 RRC connection; and stop the Uu DRX timer related to the PC5 RRC connection, based on the declared SL RLF.

According to an embodiment of the present disclosure, a device adapted to control a first user equipment, UE, may be proposed. For example, the device may comprise: one or more processors; and one or more memories operably connectable to the one or more processors and storing instructions. For example, the one or more processors may execute the instructions to: establish PC5 radio resource control, RRC, connection with a second UE; perform sidelink, SL, communication with the second UE performing an SL discontinuous reception, DRX, operation based on an SL DRX configuration; perform a resource request, to a base station, for the SL communication through a physical uplink control channel, PUCCH, or a physical uplink shared channel, PUSCH, based on a Uu DRX timer related to the PC5 RRC connection; monitor, from the base station, downlink control information, DCI, including resource information for the SL communication, through a physical downlink control channel, PDCCH, as a response to the resource request, based on the Uu DRX timer related to the PC5 RRC connection; declare SL radio link failure, RLF, related to the PC5 RRC connection; and stop the Uu DRX timer related to the PC5 RRC connection, based on the declared SL RLF.

According to an embodiment of the present disclosure, a non-transitory computer-readable storage medium storing instructions that, when executed, cause a first device to: establish PC5 radio resource control, RRC, connection with a second device; perform sidelink, SL, communication with the second device performing an SL discontinuous reception, DRX, operation based on an SL DRX configuration; perform a resource request, to a base station, for the SL communication through a physical uplink control channel, PUCCH, or a physical uplink shared channel, PUSCH, based on a Uu DRX timer related to the PC5 RRC connection; monitor, from the base station, downlink control information, DCI, including resource information for the SL communication, through a physical downlink control channel, PDCCH, as a response to the resource request, based on the Uu DRX timer related to the PC5 RRC connection; declare SL radio link failure, RLF, related to the PC5 RRC connection; and stop the Uu DRX timer related to the PC5 RRC connection, based on the declared SL RLF.

FIG. 11 shows a procedure for a second device to perform wireless communication, according to one embodiment of the present disclosure. The embodiment of FIG. 11 may be combined with various embodiments of the present disclosure.

Referring to FIG. 11, in step S1110, a second device may establish a PC5 radio resource control, RRC, connection with a first device. In step S1120, the second device may perform SL communication with the first device based on a sidelink, SL, discontinuous reception, DRX, configuration. In step S1130, the second device may declare SL radio link failure, RLF, related to the PC5 RRC connection. In step S1140, the second device may stop an SL DRX timer related to the PC5 RRC connection, based on the declared SL RLF.

For example, an SL DRX timer related to the PC5 RRC connection may include an SL DRX timer related to an SL process running in the PC5 RRC connection, and the SL DRX timer related to the SL process may include at least one of an SL DRX on-duration timer, an SL DRX inactivity timer, an SL DRX hybrid automatic repeat request, HARQ, round trip time, RTT, timer, or an SL DRX retransmission timer.

The above-described embodiments may be applied to various devices described below. First, a processor 202 of a second device 200 may establish a PC5 radio resource control, RRC, connection with a first device 100. And, the second device 202 may control a transceiver 206 to perform SL communication with the first device 100 based on a sidelink, SL, discontinuous reception, DRX, configuration. And, the processor 202 of the second device 200 may declare SL radio link failure, RLF, related to the PC5 RRC connection. And, the processor 202 second device 200 may stop an SL DRX timer related to the PC5 RRC connection, based on the declared SL RLF. For example, an SL DRX timer related to the PC5 RRC connection may include an SL DRX timer related to an SL process running in the PC5 RRC connection, and the SL DRX timer related to the SL process may include at least one of an SL DRX on-duration timer, an SL DRX inactivity timer, an SL DRX hybrid automatic repeat request, HARQ, round trip time, RTT, timer, or an SL DRX retransmission timer.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: establish a PC5 radio resource control, RRC, connection with a first device; perform SL communication with the first device based on a sidelink, SL, discontinuous reception, DRX, configuration; declare SL radio link failure, RLF, related to the PC5 RRC connection; and stop an SL DRX timer related to the PC5 RRC connection, based on the declared SL RLF.

For example, an SL DRX timer related to the PC5 RRC connection may include an SL DRX timer related to an SL process running in the PC5 RRC connection, and the SL DRX timer related to the SL process may include at least one of an SL DRX on-duration timer, an SL DRX inactivity timer, an SL DRX hybrid automatic repeat request, HARQ, round trip time, RTT, timer, or an SL DRX retransmission timer.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

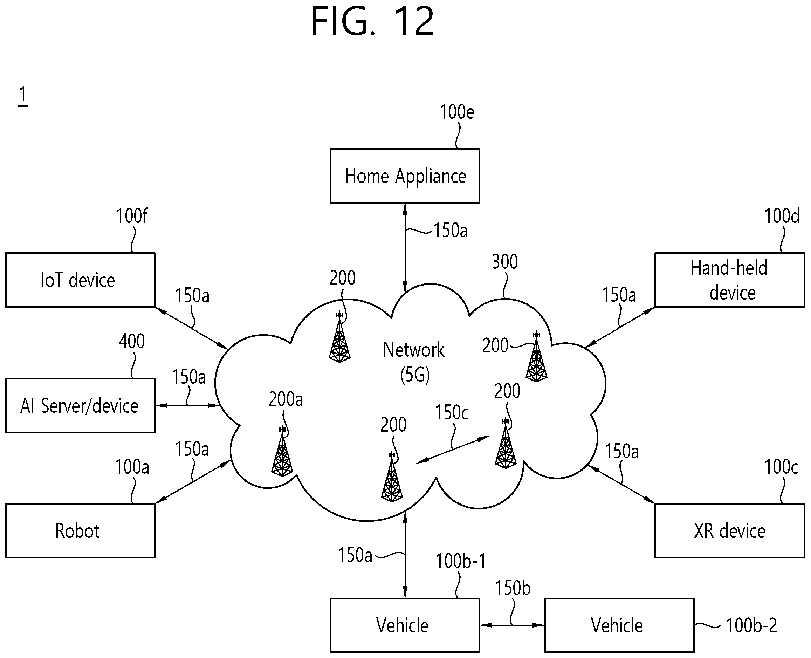

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, the wireless communication technologies implemented in the wireless devices 100a-100f of the present disclosure may include LTE, NR, and 6G, as well as Narrowband Internet of Things for low power communication. In this case, for example, NB-IoT technology may be an example of Low Power Wide Area Network (LPWAN) technology, and may be implemented in specifications such as LTE Cat NB1 and/or LTE Cat NB2, and is not limited to the above names. Additionally or alternatively, the wireless communication technology implemented in the wireless devices 100a-100f of this specification may perform communication based on LTE-M technology. In one example, LTE-M technology may be an example of LPWAN technology and may be referred to by various names, such as enhanced Machine Type Communication (eMTC). For example, LTE-M technology may be implemented as at least one of various specifications, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above names. Additionally or alternatively, the wireless communication technology implemented in the wireless devices 100a-100f of this disclosure may include at least one of ZigBee, Bluetooth, and Low Power Wide Area Network (LPWAN), with consideration for low power communication, and is not limited to the above names. For example, ZigBee technology can create personal area networks (PANs) for small, low-power digital communications based on various specifications, such as IEEE 802.15.4, and may be referred to by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

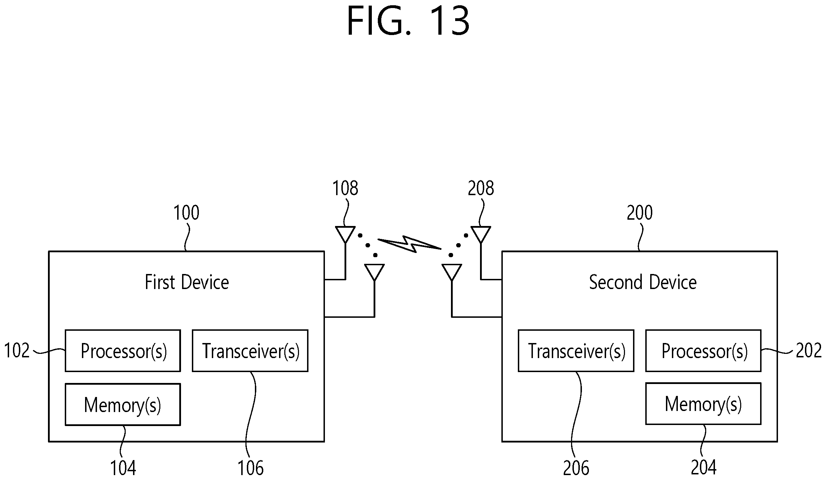

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

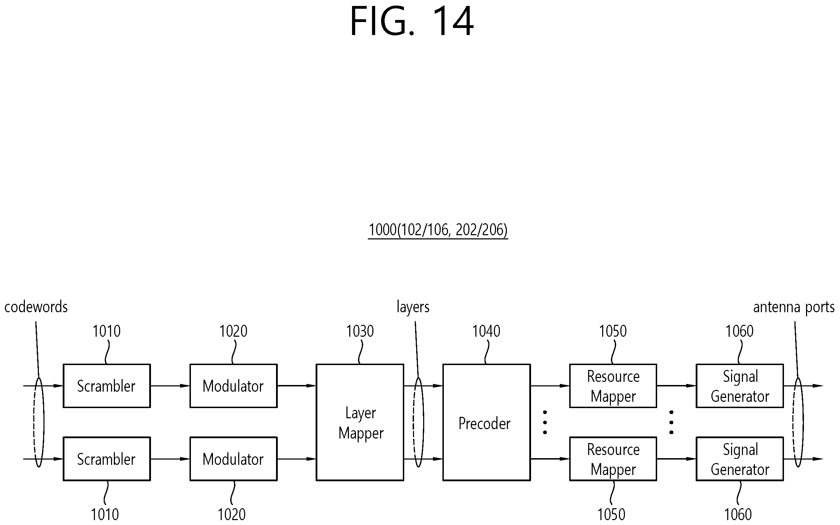

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

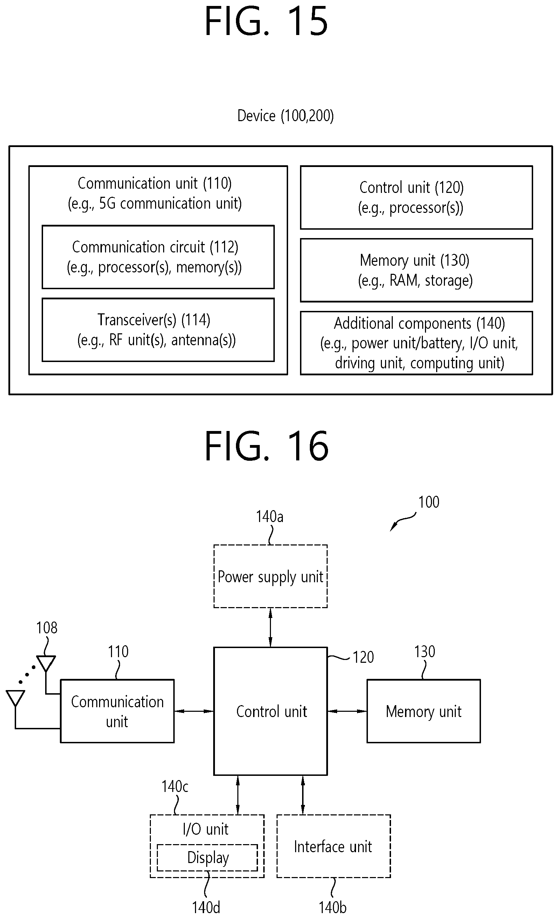

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

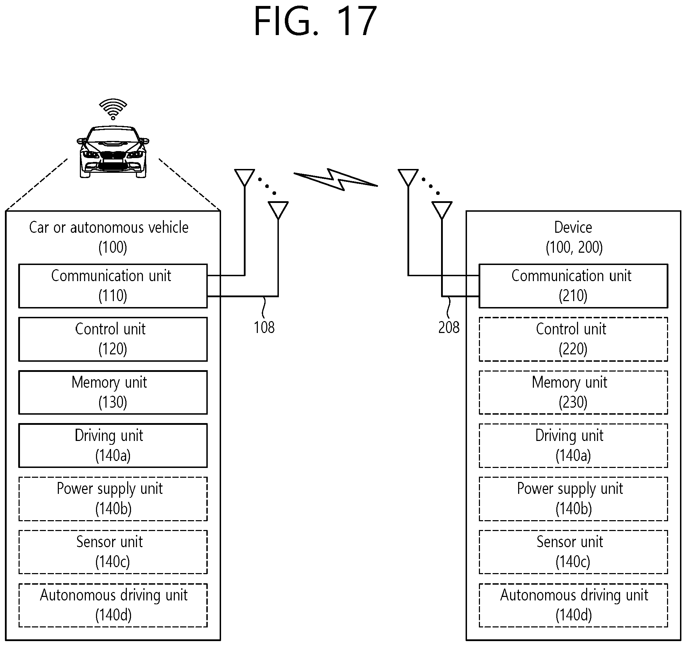

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for perming, by a first device, wireless communication, the method comprising:
establishing PC5 radio resource control, RRC, connection with a second device;
performing sidelink, SL, communication with the second device performing an SL discontinuous reception, DRX, operation based on an SL DRX configuration;
performing a resource request, to a base station, for the SL communication through a physical uplink control channel, PUCCH, or a physical uplink shared channel, PUSCH, based on a Uu DRX timer related to the PC5 RRC connection;
monitoring, from the base station, downlink control information, DCI, including resource information for the SL communication, through a physical downlink control channel, PDCCH, as a response to the resource request, based on the Uu DRX timer related to the PC5 RRC connection;
declaring SL radio link failure, RLF, related to the PC5 RRC connection; and
stopping the Uu DRX timer related to the PC5 RRC connection, based on the declared SL RLF.

2. The method of claim 1, wherein stop of a Uu DRX timer not related to the PC5 RRC connection is not allowed, based on the declared SL RLF.

3. The method of claim 1, further comprising:
stopping monitoring for the DCI related to the PC5 RRC connection.

4. The method of claim 3, wherein stop of monitoring for DCI not related to the PC5 RRC connection is not allowed.

5. The method of claim 1, further comprising:
transmitting, to the base station, SL UE information related to the SL RLF,
wherein the SL UE information includes at least one of a hybrid automatic repeat request, HARQ, process identifier, ID, related to the PC5 RRC connection, a source/destination ID pair related to the PC5 RRC connection, or an SL process ID related to the PC5 RRC connection.

6. The method of claim 5, wherein a retransmission scheduling operation related to the PC5 RRC connection is stopped by the base station, based on the SL UE information.

7. The method of claim 5, wherein an SL data radio bearer, DRB, configuration related to the PC5 RRC connection or a configuration related to the Uu DRX timer related to the PC5 RRC connection is released by the base station, based on the SL UE information.

8. The method of claim 1, wherein the SL RLF is declared based on at least one of:
i) a number of retransmissions for a destination of the PC5 RRC connection reaching a maximum retransmission number;
ii) T400 for the destination of the PC5 RRC connection being expired;
iii) a number of consecutive occurrences of HARQ discontinuous transmission, DTX, for the destination of the PC5 RRC connection reaching a maximum number of consecutive occurrences of HARQ DTX; or
iv) a failure of an integrity check for a signaling radio bearer, SRB, for the PC5 RRC connection.

9. The method of claim 1, wherein the Uu DRX timer includes a Uu DRX HARQ round trip time, RTT, TimerSL or a Uu DRX Retransmission TimerSL.

10. The method of claim 9, wherein the Uu DRX timer is related to a HARQ process ID related to SL data transmitted through the SL communication.

11. The method of claim 1, wherein a HARQ process ID related to the PC5 RRC connection is determined based on a current slot at which the SL communication is performed.

12. The method of claim 1, wherein an SL process related to the PC5 RRC connection and a HARQ process ID related to the PC5 RRC connection have a one to one mapping relationship.

13. The method of claim 12, wherein an SL process ID related to the SL process and the HARQ process ID have a one to one mapping relationship.

14. A first device for performing wireless communication, the first device comprising:
one or more memories storing instructions;
one or more transceivers; and
one or more processors connected to the one or more memories and the one or more transceivers, wherein the one or more processors execute the instructions to:
establish PC5 radio resource control, RRC, connection with a second device;
perform sidelink, SL, communication with the second device performing an SL discontinuous reception, DRX, operation based on an SL DRX configuration;
perform a resource request, to a base station, for the SL communication through a physical uplink control channel, PUCCH, or a physical uplink shared channel, PUSCH, based on a Uu DRX timer related to the PC5 RRC connection;
monitor, from the base station, downlink control information, DCI, including resource information for the SL communication, through a physical downlink control channel, PDCCH, as a response to the resource request, based on the Uu DRX timer related to the PC5 RRC connection;
declare SL radio link failure, RLF, related to the PC5 RRC connection; and
stop the Uu DRX timer related to the PC5 RRC connection, based on the declared SL RLF.

15. A device adapted to control a first user equipment, UE, the device comprising:
one or more processors; and
one or more memories operably connectable to the one or more processors and storing instructions, wherein the one or more processors execute the instructions to:
establish PC5 radio resource control, RRC, connection with a second UE;
perform sidelink, SL, communication with the second UE performing an SL discontinuous reception, DRX, operation based on an SL DRX configuration;
perform a resource request, to a base station, for the SL communication through a physical uplink control channel, PUCCH, or a physical uplink shared channel, PUSCH, based on a Uu DRX timer related to the PC5 RRC connection;
monitor, from the base station, downlink control information, DCI, including resource information for the SL communication, through a physical downlink control channel, PDCCH, as a response to the resource request, based on the Uu DRX timer related to the PC5 RRC connection;
declare SL radio link failure, RLF, related to the PC5 RRC connection; and
stop the Uu DRX timer related to the PC5 RRC connection, based on the declared SL RLF.

16. A non-transitory computer-readable storage medium storing instructions that, when executed, cause a first device to:
establish PC5 radio resource control, RRC, connection with a second device;
perform sidelink, SL, communication with the second device performing an SL discontinuous reception, DRX, operation based on an SL DRX configuration;
perform a resource request, to a base station, for the SL communication through a physical uplink control channel, PUCCH, or a physical uplink shared channel, PUSCH, based on a Uu DRX timer related to the PC5 RRC connection;
monitor, from the base station, downlink control information, DCI, including resource information for the SL communication, through a physical downlink control channel, PDCCH, as a response to the resource request, based on the Uu DRX timer related to the PC5 RRC connection;
declare SL radio link failure, RLF, related to the PC5 RRC connection; and
stop the Uu DRX timer related to the PC5 RRC connection, based on the declared SL RLF.

17. A method for performing, by a second device, wireless communication, the method comprising:
establishing a PC5 radio resource control, RRC, connection with a first device;
performing SL communication with the first device based on a sidelink, SL, discontinuous reception, DRX, configuration;
declaring SL radio link failure, RLF, related to the PC5 RRC connection; and
stopping an SL DRX timer related to the PC5 RRC connection, based on the declared SL RLF.

18. The method of claim 17, wherein an SL DRX timer related to the PC5 RRC connection includes an SL DRX timer related to an SL process running in the PC5 RRC connection, and
wherein the SL DRX timer related to the SL process includes at least one of an SL DRX on-duration timer, an SL DRX inactivity timer, an SL DRX hybrid automatic repeat request, HARQ, round trip time, RTT, timer, or an SL DRX retransmission timer.

19. A second device for performing wireless communication, the second device comprising:
one or more memories storing instructions;
one or more transceivers; and
one or more processors connected to the one or more memories and the one or more transceivers, wherein the one or more processors execute the instructions to:
establish a PC5 radio resource control, RRC, connection with a first device;
perform SL communication with the first device based on a sidelink, SL, discontinuous reception, DRX, configuration;
declare SL radio link failure, RLF, related to the PC5 RRC connection; and
stop an SL DRX timer related to the PC5 RRC connection, based on the declared SL RLF.

20. The second device of claim 19, wherein an SL DRX timer related to the PC5 RRC connection includes an SL DRX timer related to an SL process running in the PC5 RRC connection, and
wherein the SL DRX timer related to the SL process includes at least one of an SL DRX on-duration timer, an SL DRX inactivity timer, an SL DRX hybrid automatic repeat request, HARQ, round trip time, RTT, timer, or an SL DRX retransmission timer.
